# FASCICULE DE BREVET EUROPEEN

(11) **EP 3 733 506 B1**
(45) Date de publication et mention de la délivrance du brevet: **04.08.2021**
(21) Numéro de dépôt: 20167040.3
(22) Date de dépôt: 31.03.2020
(51) Int. Cl.: B64C 7/00, B64C 27/04, B64C 27/12, B64D 33/00, B64D 33/08, B64D 35/00, B64D 33/02

(54) **GIRAVION ÉQUIPÉ D'UN DISPOSITIF AÉRODYNAMIQUE COMPORTANT UN CARÉNAGE PRÉSENTANT UNE ENTRÉE D'AIR**
DREHFLÜGELFLUGZEUG, DAS MIT EINER AERODYNAMISCHEN VORRICHTUNG AUSGESTATTET IST, DIE EINE ABDECKUNG MIT EINEM LUFTEINLASS UMFASST
ROTORCRAFT PROVIDED WITH AN AERODYNAMIC DEVICE COMPRISING A FAIRING HAVING AN AIR INTAKE

(30) Priorité: 30.04.2019 FR 1904544
(43) Date de publication de la demande: 04.11.2020
(73) Titulaire: Airbus Helicopters, 13725 Marignane Cedex (FR)
(72) Inventeur: COQUILLAT, Jean-Christophe, 13710 Fuveau (FR)
(74) Mandataire: GPI Brevets

(56) Documents cités:
- EP-A1- 3 106 646
- EP-A2- 0 283 578
- US-A- 4 203 566
- US-A- 5 865 398
- US-A1- 2011 151 764

## Description

La présente invention se rapporte au domaine aéronautique et plus particulièrement au domaine des giravions. De tels aéronefs comportent ainsi au moins un rotor muni de pales permettant de réaliser une sustentation d'un aéronef, voire également une propulsion de l'aéronef, dans les airs.

Plus précisément, l'invention trouve son application dans le domaine des dispositifs aérodynamiques agencés au niveau du fuselage ou de l'enveloppe d'un tel giravion. De tels dispositifs aérodynamiques peuvent comporter un carénage permettant par exemple de protéger un moteur et/ou une boite de transmission de puissance d'un giravion.

En outre, tels que notamment décrits par le document EP 0 283 578 de tels carénages peuvent comporter une ou plusieurs entrées d'air frais permettant par exemple à l'air extérieur de pénétrer à l'intérieur du fuselage du giravion de manière à refroidir un fluide caloriporteur circulant dans un échangeur thermique ou encore à alimenter en comburant un moteur du giravion. Ces entrées d'air peuvent comporter des grilles, des barreaux ou encore des lames fixes pour avantageusement orienter le flux d'air entrant.

Cependant, l'air frais peut être aspiré à différents niveaux de pression au niveau de ces entrées d'air. En effet, la pression en entrée du flux d'air frais peut varier notamment en fonction de la dépression générée par un organe aspirant tel qu'un moteur ou un ventilateur situés en aval de l'entrée d'air ou encore des conditions d'équilibre du giravion qui fluctuent selon le type de vol du giravion qui peut être par exemple stationnaire, rectiligne ou en « dérapage ».

En outre, la taille de l'embouchure de l'entrée d'air située au niveau du fuselage est particulièrement complexe à dimensionner.

En effet, lors d'une phase de vol stationnaire du giravion, une grande embouchure de l'entrée d'air permet de minimiser les pertes de charges et garantit ainsi un fonctionnement optimal de l'organe alimenté, tel que par exemple un échangeur thermique ou un moteur, alimenté en air frais par un tel dispositif aérodynamique.

Cependant lors d'une phase de vol d'avancement, une grande embouchure peut générer un refoulement non contrôlé d'un débit d'air frais excédant et causer une trainée de captation non négligeable avec un risque de vibrations au niveau de la poutre de queue et/ou un mauvais refroidissement d'un échangeur thermique.

En revanche avec une embouchure de petites dimensions, lors d'une phase de vol stationnaire du giravion, il se produit des pertes de charges au niveau de cette embouchure. Dès lors cela pénaliserait les performances d'un ventilateur et produirait un mauvais refroidissement d'un échangeur thermique.

Par ailleurs, lors d'une phase de vol d'avancement du giravion, une embouchure de petites dimensions permet de minimiser le débit d'air frais refoulé par l'entrée d'air et donc de minimiser les risques de sillage et /ou de trainé de captation.

Ainsi, la taille de l'embouchure est déterminée en fonction d'un compromis permettant notamment d'assurer une alimentation en air frais optimale lors d'une phase de vol stationnaire du giravion et/ou lors d'une phase de vol d'avancement du giravion.

Dès lors, un tel compromis peut induire des restrictions quant à la performance d'un giravion et/ou en termes de design aérodynamique du carénage en général et de l'entrée d'air en particulier.

Par ailleurs, dans d'autres domaines techniques que celui des giravion, il est connu de piloter un volet mobile avec un actionneur pour orienter des volets à l'embouchure d'une entrée d'air. Les documents US 2011 / 0151764, US 4 203 566, EP 3 106 646, et US 5 865 398 décrivent de tels actionneurs.

Cependant, de tels actionneurs ou leurs commandes respectives peuvent être défaillants et tomber en panne. En cas de panne, de tels volets peuvent alors être maintenus immobiles en position fermée par les actionneurs. Un tel agencement n'est donc pas optimal en termes de performances et de sécurité.

La présente invention a alors pour objet de proposer un giravion équipé d'un dispositif aérodynamique comportant un carénage présentant une entrée d'air dont l'embouchure est optimisée pour les différentes phases de vol du giravion.

L'invention concerne donc un giravion comportant un dispositif aérodynamique agencé en dessous d'un rotor participant au moins à la sustentation du giravion dans les airs, le rotor tournant autour d'un premier axe de rotation OZ le dispositif aérodynamique comportant un carénage présentant au moins une entrée d'air pour permettre un écoulement d'un flux d'air frais entre une zone située à l'extérieur du giravion vers une autre zone située à l'intérieur du giravion.

Selon l'invention, un tel giravion est remarquable ce qu'au moins à une embouchure de la (ou des) entrée(s) d'air du carénage, le dispositif aérodynamique comporte au moins un volet mobile en rotation, le(s) volet(s) mobile(s) comportant au moins un degré de liberté en rotation autour d'un second axe de rotation O₁Y₁, O₂Y₂, O₃Y₃ par rapport au carénage, le(s) volet(s) mobile(s) s'orientant automatiquement et passivement en fonction d'une orientation courante du flux d'air frais au niveau de l'embouchure de l'entrée d'air, le second axe de rotation O₁Y₁, O₂Y₂, O₃Y₃ étant agencé dans un plan X₁O₁Y₁, X₂O₂Y₂, X₃O₃Y₃ orienté perpendiculairement par rapport au premier axe de rotation OZ.

Autrement dit, la taille de la surface de passage de l'air frais au niveau de l'embouchure peut être adaptée automatiquement en fonction du débit et de l'orientation du flux d'air au niveau de l'embouchure de l'entrée d'air. De cette manière, le(s) volet(s) mobile(s) permettent, lors d'une phase de vol stationnaire du giravion, de maximiser la surface d'aspiration au niveau de l'embouchure et par conséquent de limiter la vitesse de l'écoulement du flux d'air dans l'entrée d'air.

En effet, une telle surface de passage de l'air frais au niveau de l'embouchure dépend de l'orientation du flux d'air car l'embouchure de l'entrée d'air est orientée vers une zone avant du giravion en étant inclinée vers le haut, dans un plan vertical agencé perpendiculairement par rapport au second axe de rotation O₁Y₁, O₂Y₂, O₃Y₃. Une telle inclinaison de l'embouchure peut par exemple être comprise entre 1° et 89°, voire préférentiellement comprise entre 20° et 60°, par rapport à un axe en élévation O₁Z₁, O₂Z₂, O₃Z₃ dans le plan X₁O₁Z₁, X₂O₂Z₂, X₃O₃Z₃.

En outre, les pertes de charge au niveau de l'entrée d'air sont alors faibles et, en sortie de l'entrée d'air, un refroidissement d'échangeurs thermiques peut être optimisé et/ou une admission des moteurs en air frais peut être optimale.

Par ailleurs, un tel dispositif aérodynamique permet, lors d'une phase de vol d'avancement du giravion, de fournir une surface d'aspiration réduite permettant de minimiser le débit d'air excédant et, par conséquent la trainée de captation d'un giravion ainsi équipé.

Le (ou les) volet(s) mobile(s) sont donc aptes à s'orienter librement autour de leurs seconds axes de rotation O₁Y₁, O₂Y₂, O₃Y₃ par exemple en fonction d'une orientation principale du flux d'air frais ou d'une pression exercée par le flux d'air frais à leur surface respectives. De plus, par l'expression « passivement », il est sous entendu qu'aucun moteur n'est utilisé pour faire varier l'orientation angulaire d'un ou plusieurs volet(s) mobile(s).

Bien entendu, un tel dispositif aérodynamique peut comporter un ou plusieurs volet(s) mobile(s) comportant chacun au moins un degré de liberté en rotation autour du second axe de rotation O₁Y₁, O₂Y₂, O₃Y₃ par rapport au carénage. Lorsque le dispositif aérodynamique comporte au moins deux volets mobiles, les degrés de liberté en rotation des volets mobiles peuvent liés entre eux ou indépendants les uns des autres.

Ainsi, selon un premier exemple de réalisation de l'invention, les volets mobiles peuvent comporter un premier volet mobile et un second volet mobile, les premier et second volets mobiles étant libres de s'orienter individuellement selon au moins deux orientations angulaires distinctes l'une de l'autre respectivement par rapport aux seconds axes de rotation O₁Y₁, O₂Y₂, O₃Y₃.

Autrement dit dans ce cas, les premier et second volets ne sont pas reliés entre eux et peuvent chacun pivoter librement par rapport aux seconds axes de rotation O₁Y₁, O₂Y₂, O₃Y₃.

Selon un second exemple de réalisation de l'invention, les volets mobiles peuvent comporter un premier volet mobile et un second volet mobile, les premier et second volets mobiles pivotant conjointement selon une même orientation angulaire respectivement par rapport aux seconds axes de rotation O₁Y₁, O₂Y₂, O₃Y₃.

Dans cet autre cas, les premier et second volets sont donc reliés entre eux par exemple par des biellettes et pivotent alors simultanément dans un même sens par rapport aux seconds axes de rotation O₁Y₁, O₂Y₂, O₃Y₃.

En outre, les degrés de liberté en rotation que présentent le(s) volet(s) mobile(s) peuvent être réalisés de différentes manières et correspondent par exemple à deux variantes de l'invention décrites ci-après. Dans ces deux variantes, des paliers peuvent comporter une bague interne et/ou une bague externe et des éléments roulants tels que des billes, des rouleaux ou des aiguilles. De tels paliers peuvent également être formés par des bagues ou des coussinets réalisés dans un matériau à faible coefficient de frottement tel que du bronze ou du polytétrafluoroéthylène (PTFE).

Ainsi, selon une première variante de l'invention, le(s) volet(s) mobile(s) peuvent s'étendre longitudinalement entre deux faces en regard délimitant l'entrée d'air, une première extrémité du (ou des) volet(s) mobile(s) coopérant avec un premier palier agencé dans une première face et une seconde extrémité du (ou des) volet(s) mobile(s) coopérant avec un second palier agencé dans une seconde face, les premier et second paliers étant agencés coaxialement sur le second axe de rotation O₁Y₁, O₂Y₂, O₃Y₃.

Autrement dit dans ce cas, le premier et le second paliers sont agencés dans une zone du carénage en étant déportés latéralement de part et d'autre du (ou des) volet(s) mobile(s).

Selon une seconde variante de l'invention, le(s) volet(s) mobile(s) peuvent s'étendre longitudinalement entre deux faces en regard délimitant l'entrée d'air, une première extrémité du (ou des) volet(s) mobile(s) coopérant avec un premier palier agencé sur un axe fixe passant au travers du (ou des) volet(s) mobile(s) et une seconde extrémité du (ou des) volet(s) mobile(s) coopérant avec un second palier agencé sur l'axe fixe, les premier et second paliers étant agencés coaxialement sur le second axe de rotation O₁Y₁, O₂Y₂, O₃Y₃.

Dans cette autre cas, le premier et le second paliers sont agencés dans l'entrée d'air entre les deux faces en regard. L'axe fixe est alors solidarisé en liaison de type encastrement avec les deux faces en regard de l'entrée d'air.

Avantageusement, le(s) volet(s) mobile(s) peuvent comporter un premier volet mobile en rotation par rapport à un second axe de rotation O₁Y₁ et un second volet mobile en rotation par rapport à un autre second axe de rotation O₂Y₂, les seconds axes de rotation O₁Y₁, O₂Y₂ étant agencés parallèlement entre eux.

Autrement dit, entre deux faces en regard de l'entrée d'air, deux seconds axes de rotation O₁Y₁, O₂Y₂ peuvent s'étendre selon deux directions parallèles.

En pratique, le(s) volet(s) mobile(s) peuvent comporter un premier volet mobile en rotation par rapport à un second axe de rotation O₁Y₁, un second volet mobile en rotation par rapport à un autre second axe de rotation O₂Y₂ et un troisième volet mobile en rotation par rapport à un autre second axe de rotation O₃Y₃, les seconds axes de rotation O₁Y₁, O₂Y₂, O₃Y₃ des premier, deuxième et troisième volets mobiles étant agencés de façon coplanaire.

En d'autres termes, les trois seconds axes de rotation O₁Y₁, O₂Y₂, O₃Y₃ peuvent être inscrits dans un même plan s'entendant par exemple au niveau de l'embouchure de l'entrée d'air.

En outre, la section de chaque volet mobile peut être constante ou non respectivement le long de chaque second axe de rotation O₁Y₁, O₂Y₂, O₃Y₃.

Ainsi, selon un premier mode de réalisation de l'invention, le(s) volet(s) mobile(s) peuvent présenter une pluralité de sections transversales perpendiculaires au second axe de rotation O₁Y₁, O₂Y₂, O₃Y₃, la pluralité de sections transversales présentant un même profil aérodynamique.

Autrement dit, le profil des sections transversales peut être de forme constante pour un volet mobile donné.

Selon un second mode de réalisation de l'invention, le(s) volet(s) mobile(s) peuvent présenter une pluralité de sections transversales perpendiculaires au second axe de rotation O₁Y₁, O₂Y₂, O₃Y₃, la pluralité de sections transversales présentant au moins deux profils distincts l'un de l'autre.

Dans cet autre cas, le profil des sections transversales d'un volet mobile donné peut présenter différentes formes. Ces formes varient alors en fonction de la position de la section transversale le long du second axe de rotation O₁Y₁, O₂Y₂, O₃Y₃.

En outre, les volets d'un même dispositif aérodynamique peuvent être différents les uns des autres ou non.

Ainsi, selon une première alternative, le(s) volet(s) mobile(s) peuvent comporter un premier volet mobile et un second volet mobile, les premier et second volets mobiles étant identiques entre eux.

De cette manière, la fabrication des volets et leur assemblage pour former un dispositif aérodynamique en sont facilités. De même, les opérations de manutention et de remplacement en cas d'endommagement de l'un de ces volets sont simplifiées par une telle utilisation de volets identiques entre eux.

Selon une seconde alternative, le(s) volet(s) mobile(s) peuvent comporter un premier volet mobile et un second volet mobile, les premier et second volets mobiles étant distincts l'un de l'autre.

Un tel agencement peut quant à lui présenter l'intérêt de maximiser les performances aérodynamiques d'un tel dispositif aérodynamique.

Par ailleurs, ce(s) volet(s) mobile(s) peuvent présenter différentes formes.

Selon une première réalisation, le(s) volet(s) mobile(s) peuvent être de type profilé, le(s) volet(s) mobile(s) présentant d'une part un extrados et un intrados et d'autre part un bord d'attaque reliant l'extrados et l'intrados ainsi qu'un bord de fuite reliant l'extrados et l'intrados, le bord d'attaque et le bord de fuite s'étendant sensiblement longitudinalement selon le second axe de rotation O₁Y₁, O₂Y₂, O₃Y₃.

Un tel agencement peut présenter l'intérêt d'améliorer les performances en trainée aérodynamiques d'un tel dispositif aérodynamique. Un autre avantage de cette forme profilée est de faciliter l'auto-alignement des volets mobiles par rapport au flux d'air frais pénétrant dans l'entrée d'air.

Selon une seconde réalisation, le(s) volet(s) mobile(s) peuvent présenter une forme plane s'étendant sensiblement longitudinalement selon le second axe de rotation O₁Y₁, O₂Y₂, O₃Y₃.

Une telle forme plane est quant à elle très simple à réaliser et présente ainsi un intérêt financier pour la fabrication des volets.

Cette forme peut par exemple être réalisée par le découpage d'une plaque ou d'un organe longiligne obtenu par exemple par un procédé d'extrusion. Dans ce cas, cette forme plane ne nécessite donc pas la fabrication de moules de fabrication dédiés et adaptés à ces volets mobiles.

Avantageusement, le dispositif aérodynamique peut comporter, pour chaque volet mobile, au moins un organe de butée apte à limiter angulairement le(s) degré(s) de liberté en rotation par rapport au carénage.

Autrement dit, un tel organe de butée permet de maitriser au moins une orientation angulaire extrémale de chaque volet mobile selon l'un des seconds axes de rotation O₁Y₁, O₂Y₂, O₃Y₃. Ainsi, un tel organe de butée peut permettre de limiter les risques d'interférence entre chaque volet mobile et le carénage de l'entrée d'air ou d'autres éléments périphériques.

En pratique, le(s) volet(s) mobile(s) peuvent présenter un centre de gravité, le centre de gravité étant agencé radialement de manière déportée par rapport au second axe de rotation O₁Y₁, O₂Y₂, O₃Y₃ pour rappeler automatiquement le(s) volet(s) mobile(s) dans une orientation angulaire prédéterminée lorsque le flux d'air frais est nul, l'orientation angulaire prédéterminée permettant au(x) volet(s) mobile(s) de maximiser une obturation de l'embouchure de l'entrée d'air.

Un tel centre de gravité déporté par rapport au second axe de rotation O₁Y₁, O₂Y₂, O₃Y₃ permet alors d'engendrer un balourd qui, à l'aide de la force gravitationnelle terrestre, permet de faire pivoter le(s) volet(s) mobile(s) respectivement autours de leur second axe de rotation O₁Y₁, O₂Y₂, O₃Y₃. Un tel pivotement vers l'orientation angulaire prédéterminée est alors réalisé automatiquement par exemple pour fermer en tout ou partie l'embouchure de l'entrée d'air lors d'une période de non utilisation, de maintenance ou simplement d'attente avant une phase de vol du giravion.

Selon un autre exemple de l'invention, le dispositif aérodynamique peut comporter, pour chaque volet mobile, au moins un moyen de rappel élastique apte à rappeler le(s) volet(s) mobile(s) dans une orientation angulaire prédéterminée lorsque le flux d'air frais est nul, l'orientation angulaire prédéterminée permettant au(x) volet(s) mobile(s) de maximiser une obturation de l'embouchure de l'entrée d'air.

En d'autres termes, le(s) moyen(s) de rappel élastique peuvent permettre de rappeler automatiquement le(s) volet(s) mobile(s) dans l'orientation angulaire prédéterminée. Ce(s) moyen(s) de rappel élastique peuvent également être combiné(s) avec un centre de gravité déporté pour par exemple rendre plus rapide la vitesse de fermeture de l'embouchure de l'entrée d'air lorsque le flux d'air frais incident est nul.

En outre, de tel(s) moyen(s) de rappel élastique peuvent par exemple se présenter sous la forme d'un ou plusieurs ressorts hélicoïdaux ou spiroïdaux sollicités en traction, en compression ou encore en torsion.

L'invention et ses avantages apparaîtront avec plus de détails dans le cadre de la description qui suit avec des exemples donnés à titre illustratif en référence aux figures annexées qui représentent :
[Fig 1] - la figure 1, une vue en perspective d'un giravion conforme à l'invention,
[Fig 2] - la figure 2, une vue de face selon une première variante de dispositif aérodynamique, conformément à l'invention,
[Fig 3] - la figure 3, une vue de face selon une seconde variante de dispositif aérodynamique, conformément à l'invention,
[Fig 4] - la figure 4, une vue en coupe transversale d'un premier mode de réalisation d'un volet mobile, conformément à l'invention,
[Fig 5] - la figure 5, une vue en perspective d'un second mode de réalisation d'un volet mobile, conformément à l'invention, et
[Fig 6] - la figure 6, une vue en coupe transversale illustrant une première orientation angulaire des volets mobiles, conformément à l'invention,
[Fig 7] - la figure 7, une vue en coupe transversale illustrant une deuxième orientation angulaire des volets mobiles, conformément à l'invention, et
[Fig 8] - la figure 8, une vue en coupe transversale illustrant une troisième orientation angulaire des volets mobiles, conformément à l'invention.

Les éléments présents dans plusieurs figures distinctes peuvent être affectés d'une seule et même référence.

Comme déjà indiqué, l'invention concerne un giravion présentant au moins un rotor qui participe au moins à la sustentation, voire à la propulsion, du giravion dans les airs.

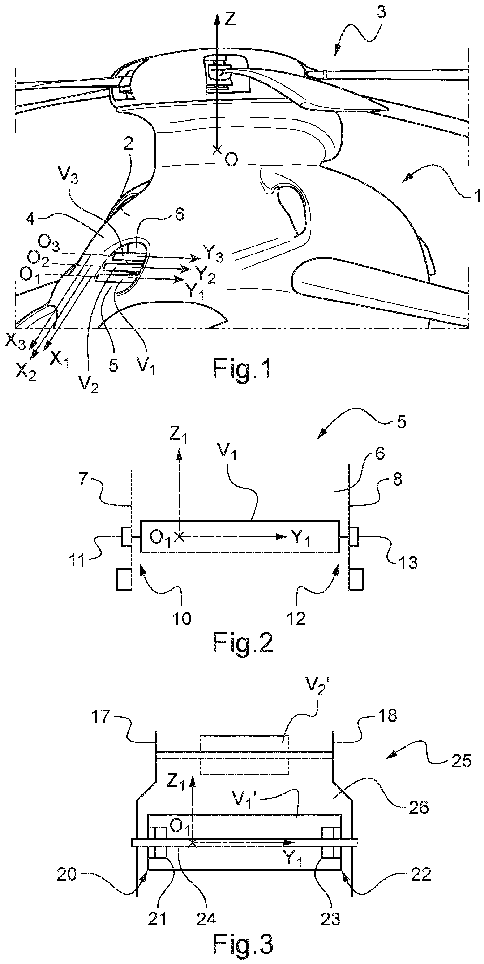

Tel que représenté à la figure 1, un tel giravion 1 peut comporter un dispositif aérodynamique 2 agencé en dessous du rotor 3.

Ce rotor 3 tourne autour d'un premier axe de rotation OZ orienté par exemple sensiblement verticalement lorsque le giravion 1 repose sur un support horizontal. En outre, le dispositif aérodynamique 2 comporte un carénage 4 présentant au moins une entrée d'air 5 permettant un écoulement d'un flux d'air frais entre une zone située à l'extérieur du giravion 1 vers une autre zone située à l'intérieur du giravion 1.

Telle que représentée, une telle entrée d'air 5 peut par exemple permettre d'alimenter en air frais un échangeur thermique de type air-huile destiné à refroidir une huile de lubrification d'un moteur ou d'une boite de transmission de puissance de l'aéronef 1. De tels organes non représentés peuvent en effet également être agencés en dessous du carénage 4.

Cette entrée d'air 5 comporte ainsi une embouchure 6 au niveau de laquelle le dispositif aérodynamique 2 présente au moins un volet V1, V2, V3 mobile en rotation. Tels que représentés, ces trois volets mobiles V1, V2, V3 comportent respectivement au moins un degré de liberté en rotation autour d'un second axe de rotation O₁Y₁, O₂Y₂, O₃Y₃ par rapport au carénage 4.

Ainsi, les trois volets mobiles V1, V2, V3 peuvent s'orienter automatiquement et passivement en fonction d'une orientation courante du flux d'air frais au niveau de cette embouchure 6 de l'entrée d'air 5. Par ailleurs, les seconds axes de rotation O₁Y₁, O₂Y₂, O₃Y₃ sont agencés dans des plans X₁O₁Y₁, X₂O₂Y₂, X₃O₃Y₃ orientés perpendiculairement par rapport au premier axe de rotation OZ.

En outre, un premier volet mobile V1 et un second volet mobile V2 peuvent être libres de s'orienter individuellement selon au moins deux orientations angulaires distinctes l'une de l'autre respectivement par rapport aux seconds axes de rotation O₁Y₁, O₂Y₂.

Alternativement, le premier volet mobile et le second volet mobile peuvent également pivoter conjointement selon une même orientation angulaire respectivement par rapport aux seconds axes de rotation O₁Y₁, O₂Y₂. Dans ce cas, des biellettes non représentées peuvent par exemple permettre de lier entre eux les premier et second volets mobiles.

Par ailleurs, tels que représentés les seconds axes de rotation O₁Y₁ et O₂Y₂ peuvent être agencés parallèlement entre eux au niveau de l'embouchure 6 de l'entrée d'air 5.

De plus, les trois volets mobiles V1, V2, V3 peuvent respectivement pivoter par rapport à un second axe de rotation O₁Y₁, O₂Y₂, O₃Y₃. Ces trois seconds axes de rotation O₁Y₁, O₂Y₂, O₃Y₃ peuvent alors avantageusement être agencés de façon coplanaire.

Selon un tel exemple de réalisation, les premier et second volets mobiles V1 et V2 peuvent être choisis identiques entre eux.

Tel que représenté à la figure 2, selon une première variante de dispositif aérodynamique 4, un volet mobile V1 peut s'étendre longitudinalement au niveau de l'embouchure 6 de l'entrée d'air 5 entre deux faces 7 et 8 agencées en regard l'une de l'autre.

Selon cette première variante, une première extrémité 10 du volet mobile V1 coopère alors avec un premier palier 11 agencé dans une première face 7 et une seconde extrémité 12 du volet mobile V1 coopère quant à elle avec un second palier 13 agencé dans une seconde face 8. En outre, les premier et second paliers 11 et 13 peuvent alors être agencés coaxialement sur le second axe de rotation O₁Y₁.

Selon une seconde variante de dispositif aérodynamique 4 représentée à la figure 3, un volet mobile V1' peut s'étendre longitudinalement au niveau d'une embouchure 26 entre deux faces en regard 17 et 18 d'une entrée d'air 25. Dans ce cas, une première extrémité 20 du volet mobile V1' peut coopérer avec un premier palier 21 agencé sur un axe fixe 24 passant au travers du volet mobile V1' et une seconde extrémité 22 du volet mobile V1' peut quant à elle coopérer avec un second palier 23 agencé sur l'axe fixe 24.

De même, les premier et second paliers 21 et 23 peuvent alors être agencés coaxialement sur le second axe de rotation O₁Y₁, O₂Y₂, O₃Y₃.

En outre, tels que représentés, les premier et second volets mobiles V1', V2' peuvent être distincts l'un de l'autre et présenter différentes longueurs respectivement le long de leurs seconds axes de rotation O₁Y₁ et O₂Y₂.

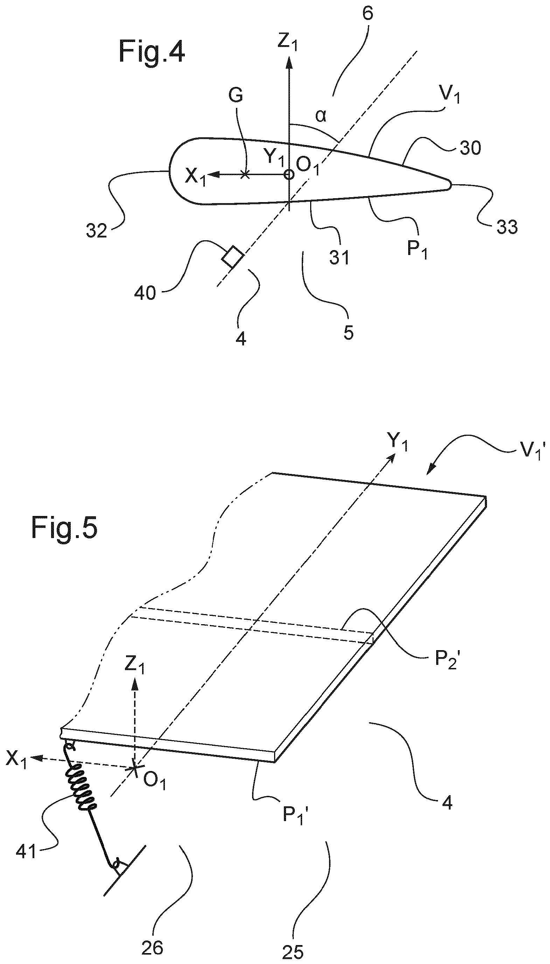

Tel que représenté à la figure 4, selon un premier mode de réalisation, un volet mobile V1 peut présenter une pluralité de sections transversales perpendiculaires au second axe de rotation O₁Y₁ présentant chacune un même profil P1 aérodynamique.

De plus, le volet mobile V1 peut être de type profilé. Ainsi, le volet mobile V1 présente d'une part un extrados 30 et un intrados 31 et d'autre part un bord d'attaque 32 reliant l'extrados 30 et l'intrados 31 ainsi qu'un bord de fuite 33 reliant l'extrados 30 et l'intrados 31. Un tel bord d'attaque 32 et un tel bord de fuite 33 peuvent alors s'étendre sensiblement longitudinalement selon le second axe de rotation O₁Y₁.

Dans le plan de la figure 4, correspondant au plan X₁O₁Z₁, l'embouchure 6 est par ailleurs orientée vers une zone avant du giravion en étant inclinée vers haut d'un angle α par rapport à un axe en élévation O₁Z₁. Un tel angle α peut être compris entre 1° et 89°, et préférentiellement compris entre 20° et 60°, de façon à faire varier une surface de passage de l'air frais au niveau de l'embouchure 6 en fonction de l'incidence du flux d'air frais au niveau de l'embouchure 6.

En outre, le dispositif aérodynamique 2 peut comporter au moins un organe de butée 40 apte à limiter angulairement le degré de liberté en rotation du volet mobile V1 par rapport au carénage 4.

Par ailleurs, un tel volet mobile V1 présente un centre de gravité G qui peut être agencé radialement de manière déportée par rapport au second axe de rotation O₁Y₁ et par exemple positionné entre le bord d'attaque 32 et le second axe de rotation O₁Y₁ De cette manière, la force gravitationnelle terrestre appliquée au volet mobile V1 permet de rappeler automatiquement ce volet mobile V1 dans une orientation angulaire prédéterminée lorsque le flux d'air frais est nul.

Avantageusement, une telle orientation angulaire prédéterminée permet au volet mobile V1 de maximiser une obturation de l'embouchure 6 de l'entrée d'air 5.

Selon un second mode de réalisation tel que représenté à la figure 5, un volet mobile V1' peut aussi présenter une pluralité de sections transversales perpendiculaires au second axe de rotation O₁Y₁ Une telle pluralité de sections transversales peut alors présenter au moins deux profils P1', P2' distincts l'un de l'autre.

Selon ce second mode de réalisation, le volet mobile V1' peut par ailleurs présenter une forme plane s'étendant sensiblement longitudinalement selon le second axe de rotation O₁Y₁.

Au surplus ou alternativement, le dispositif aérodynamique 4 peut également comporter au moins un moyen de rappel élastique 41 permettent de rappeler le volet mobile V1' dans une orientation angulaire prédéterminée lorsque le flux d'air frais est nul.

Une telle orientation angulaire prédéterminée peut comme précédemment permettre au volet mobile V1' de maximiser une obturation de l'embouchure 26 de l'entrée d'air 25.

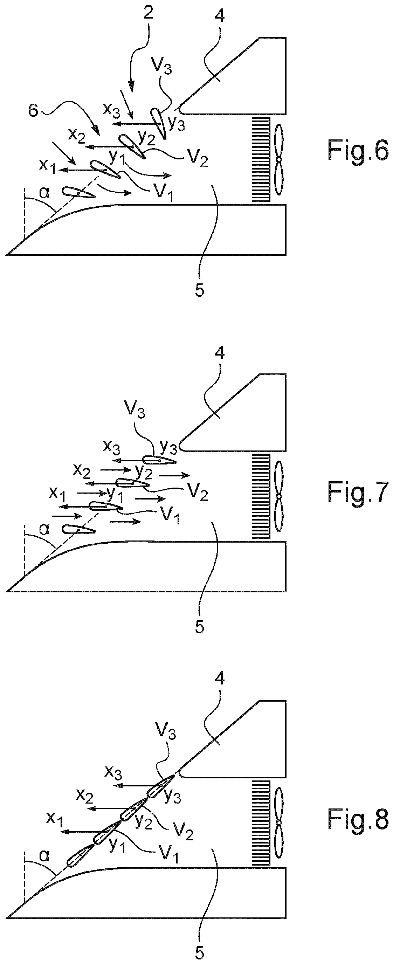

En outre tels que représentés aux figures 6 à 8, les volets mobiles V1, V2, V3 sont aptes à pivoter librement autour de leur second axe de rotation respectif O₁Y₁, O₂Y₂, O₃Y₃ entre au moins trois orientations angulaires distinctes en fonction de l'incidence du flux d'air frais au niveau de l'embouchure 6. Une telle embouchure 6 est par ailleurs, telle que représentée, sensiblement inclinée vers le haut d'un angle α par rapport à un axe en élévation O₁Z₁.

Ainsi, selon une première orientation angulaire telle que représentée à la figure 6, des volets mobiles V1, V2, V3 de type profilé, lorsque le flux d'air frais est principalement orienté du haut vers le bas du giravion 1, le bord d'attaque 32 de chaque volet mobile V1, V2, V3 est alors agencé dans un plan horizontal situé au dessus d'un autre plan horizontal contenant le bord de fuite 33 et de part et d'autre des plans X₁O₁Y₁, X₂O₂Y₂, X₃O₃Y₃ orienté perpendiculairement par rapport au premier axe de rotation OZ.

Selon une seconde orientation angulaire telle que représentée à la figure 7 lorsque le flux d'air frais est principalement orienté de l'avant vers l'arrière du giravion 1, le bord d'attaque 32 et le bord de fuite 33 des volets mobiles V1, V2, V3 sont alors agencés dans les plans X₁O₁Y₁, X₂O₂Y₂, X₃O₃Y₃.

Selon une troisième orientation angulaire telle que représentée à la figure 8, lorsque le flux d'air frais est nul, le bord d'attaque 32 de chaque volet mobile V1, V2, V3 est alors agencé dans un plan horizontal situé en dessous d'un autre plan horizontal contenant le bord de fuite 33 de part et d'autre des plans X₁O₁Y₁, X₂O₂Y₂, X₃O₃Y₃.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Giravion (1) comportant un dispositif aérodynamique (2) agencé en dessous d'un rotor (3) participant au moins à la sustentation dudit giravion (1) dans les airs, ledit rotor (3) tournant autour d'un premier axe de rotation (OZ) ledit dispositif aérodynamique (2) comportant un carénage (4) présentant au moins une entrée d'air (5, 25) pour permettre un écoulement d'un flux d'air frais entre une zone située à l'extérieur dudit giravion (1) vers une autre zone située à l'intérieur dudit giravion (1), où au moins à une embouchure (6, 26) de ladite au moins une entrée d'air (5, 25) dudit carénage (4), ledit dispositif aérodynamique (2) comporte au moins un volet (V1, V2, V3, V1', V2', V3'), **caractérisé en ce que** ledit au moins un volet est mobile en rotation, ledit au moins un volet mobile (V1, V2, V3, V1', V2', V3') comportant au moins un degré de liberté en rotation autour d'un second axe de rotation (O₁Y₁, O₂Y₂, O₃Y₃) par rapport audit carénage (4), ledit au moins un volet mobile (V1, V2, V3, V1', V2', V3') s'orientant automatiquement et passivement en fonction d'une orientation courante dudit flux d'air frais au niveau de ladite embouchure (6, 26) de ladite entrée d'air (5, 25), ledit second axe de rotation (O₁Y₁, O₂Y₂, O₃Y₃) étant agencé dans un plan (X₁O₁Y₁, X₂O₂Y₂, X₃O₃Y₃) orienté perpendiculairement par rapport audit premier axe de rotation (OZ).

2. Giravion selon la revendication 1, **caractérisé en ce que** ledit au moins un volet mobile (V1, V2, V3) comporte un premier volet mobile (V1) et un second volet mobile (V2), lesdits premier et second volets mobiles (V1, V2) étant libres de s'orienter individuellement selon au moins deux orientations angulaires distinctes l'une de l'autre respectivement par rapport auxdits seconds axes de rotation (O₁Y₁, O₂Y₂, O₃Y₃).

3. Giravion selon la revendication 1, **caractérisé en ce que** ledit au moins un volet mobile (V1', V2', V3') comporte un premier volet mobile (V1') et un second volet mobile (V2'), lesdits premier et second volets mobiles (V1', V2') pivotant conjointement selon une même orientation angulaire respectivement par rapport auxdits seconds axes de rotation (O₁Y₁, O₂Y₂, O₃Y₃).

4. Giravion selon l'une quelconque des revendications 1 à 3, **caractérisé en ce que** ledit au moins un volet mobile (V1, V2, V3) s'étend longitudinalement entre deux faces (7 et 8) en regard délimitant ladite entrée d'air (5), une première extrémité (10) dudit au moins un volet mobile (V1, V2, V3) coopérant avec un premier palier (11) agencé dans une première face (7) et une seconde extrémité (12) dudit au moins un volet mobile (V1, V2, V3) coopérant avec un second palier (13) agencé dans une seconde face (8), lesdits premier et second paliers (11 et 13) étant agencés coaxialement sur ledit second axe de rotation (O₁Y₁, O₂Y₂, O₃Y₃).

5. Giravion selon l'une quelconque des revendications 1 à 3,
**caractérisé en ce que** ledit au moins un volet mobile (V1', V2', V3') s'étend longitudinalement entre deux faces en regard (17 et 18) délimitant ladite entrée d'air (25), une première extrémité (20) dudit au moins un volet mobile (V1', V2', V3') coopérant avec un premier palier (21) agencé sur un axe fixe (24) passant au travers dudit au moins un volet mobile (V1', V2', V3') et une seconde extrémité (22) dudit au moins un volet mobile (V1', V2', V3') coopérant avec un second palier (23) agencé sur ledit axe fixe (24), lesdits premier et second paliers (21 et 23) étant agencés coaxialement sur ledit second axe de rotation (O₁Y₁, O₂Y₂, O₃Y₃).

6. Giravion selon l'une quelconque des revendications 1 à 5, **caractérisé en ce que** ledit au moins un volet mobile (V1, V2, V3, V1', V2', V3') comporte un premier volet (V1, V1') mobile en rotation par rapport à un second axe de rotation (O₁Y₁) et un second volet (V2, V2') mobile en rotation par rapport à un autre second axe de rotation (O₂Y₂), lesdits seconds axes de rotation (O₁Y₁ et O₂Y₂) étant agencés parallèlement entre eux.

7. Giravion selon l'une quelconque des revendications 1 à 6, **caractérisé en ce que** ledit au moins un volet mobile (V1, V2, V3, V1', V2', V3') comporte un premier volet (V1, V1') mobile en rotation par rapport à un second axe de rotation (O₁Y₁), un second volet (V2, V2') mobile en rotation par rapport à un autre second axe de rotation (O₂Y₂) et un troisième volet (V3, V3') mobile en rotation par rapport à un autre second axe de rotation (O₃Y₃), lesdits seconds axes de rotation (O₁Y₁, O₂Y₂, O₃Y₃) desdits premier, deuxième et troisième volets mobiles (V1, V2, V3, V1', V2', V3') étant agencés de façon coplanaire.

8. Giravion selon l'une quelconque des revendications 1 à 7, **caractérisé en ce que** ledit au moins un volet mobile (V1, V2, V3) présente une pluralité de sections transversales perpendiculaires audit second axe de rotation (O₁Y₁, O₂Y₂, O₃Y₃), ladite pluralité de sections transversales présentant un même profil (P1) aérodynamique.

9. Giravion selon l'une quelconque des revendications 1 à 7, **caractérisé en ce que** ledit au moins un volet mobile (V1', V2', V3') présente une pluralité de sections transversales perpendiculaires audit second axe de rotation (O₁Y₁, O₂Y₂, O₃Y₃), ladite pluralité de sections transversales présentant au moins deux profils (P1', P2') distincts l'un de l'autre.

10. Giravion selon l'une quelconque des revendications 1 à 9, **caractérisé en ce que** ledit au moins un volet mobile (V1, V2, V3) comporte un premier volet mobile (V1) et un second volet mobile (V2), lesdits premier et second volets mobiles (V1 et V2) étant identiques entre eux.

11. Giravion selon l'une quelconque des revendications 1 à 9, **caractérisé en ce que** ledit au moins un volet mobile (V1', V2', V3') comporte un premier volet mobile (V1') et un second volet mobile (V2'), lesdits premier et second volets mobiles (V1', V2') étant distincts l'un de l'autre.

12. Giravion selon l'une quelconque des revendications 1 à 11, **caractérisé en ce que** ledit au moins un volet mobile (V1, V2, V3) est de type profilé, ledit au moins un volet mobile (V1, V2, V3) présentant d'une part un extrados (30) et un intrados (31) et d'autre part un bord d'attaque (32) reliant l'extrados (30) et l'intrados (31) ainsi qu'un bord de fuite (33) reliant l'extrados (30) et l'intrados (31), ledit bord d'attaque (32) et ledit bord de fuite (33) s'étendant sensiblement longitudinalement selon ledit second axe de rotation (O₁Y₁, O₂Y₂, O₃Y₃).

13. Giravion selon l'une quelconque des revendications 1 à 11, **caractérisé en ce que** ledit au moins un volet mobile (V1', V2', V3') présente une forme plane s'étendant sensiblement longitudinalement selon ledit second axe de rotation (O₁Y₁, O₂Y₂, O₃Y₃).

14. Giravion selon l'une quelconque des revendications 1 à 13, **caractérisé en ce que** ledit dispositif aérodynamique (2) comporte, pour chacun desdits au moins un volet mobile (V1, V2, V3, V1', V2', V3'), au moins un organe de butée (40) apte à limiter angulairement ledit au moins un degré de liberté en rotation par rapport audit carénage (4).

15. Giravion selon l'une quelconque des revendications 1 à 14, **caractérisé en ce que** ledit au moins un volet mobile (V1, V2, V3, V1', V2', V3') présente un centre de gravité (G), ledit centre de gravité (G) étant agencé radialement de manière déportée par rapport audit second axe de rotation (O₁Y₁, O₂Y₂, O₃Y₃) pour rappeler automatiquement ledit au moins un volet mobile (V1, V2, V3, V1', V2', V3') dans une orientation angulaire prédéterminée lorsque ledit flux d'air frais est nul, ladite orientation angulaire prédéterminée permettant audit au moins un volet mobile (V1, V2, V3, V1', V2', V3') de maximiser une obturation de ladite embouchure (6, 26) de ladite entrée d'air (5, 25).

16. Giravion selon l'une quelconque des revendications 1 à 15, **caractérisé en ce que** ledit dispositif aérodynamique (2) comporte, pour chacun desdits au moins un volet mobile (V1, V2, V3, V1', V2', V3'), au moins un moyen de rappel élastique (41) apte à rappeler ledit au moins un volet mobile (V1, V2, V3, V1', V2', V3') dans une orientation angulaire prédéterminée lorsque ledit flux d'air frais est nul, ladite orientation angulaire prédéterminée permettant audit au moins un volet mobile (V1, V2, V3, V1', V2', V3') de maximiser une obturation de ladite embouchure (6, 26) de ladite entrée d'air (5, 25).

## Patentansprüche

1. Drehflügelflugzeug (1) mit einer aerodynamischen Vorrichtung (2), die unterhalb eines Rotors (3) angeordnet ist, der am Auftrieb des Drehflügelflugzeugs (1) in der Luft zumindest beteiligt ist, wobei der Rotor (3) um eine erste Drehachse (OZ) rotiert, wobei die aerodynamische Vorrichtung (2) eine Verkleidung (4) mit mindestens einem Lufteinlass (5, 25) aufweist, um das Fließen eines Frischluftstroms zwischen einer Zone, die sich außerhalb des Drehflügelflugzeugs (1) befindet, und einer anderen Zone, die sich innerhalb des Drehflügelflugzeugs (1) befindet, zu ermöglichen, wobei zumindest an einer Mündung (6, 26) des mindestens einen Lufteinlasses (5, 25) der Verkleidung (4) die aerodynamische Vorrichtung (2) mindestens eine Klappe (V1, V2, V3, V1', V2', V3') umfasst),
**dadurch gekennzeichnet, dass** die mindestens eine Klappe drehbar ist, dass die mindestens eine bewegliche Klappe (V1, V2, V3, V1', V2', V3') mindestens einen Freiheitsgrad der Drehung um eine zweite Drehachse (O₁Y₁, O₂Y₂, O₃Y₃) relativ zu der Verkleidung (4) aufweist, dass die mindestens eine bewegliche Klappe (V1, V2, V3, V1', V2', V3') sich automatisch und passiv in Abhängigkeit von einer aktuellen Ausrichtung des Frischluftstroms in Höhe der Mündung (6, 26) des Lufteinlasses (5, 25) orientiert, und dass die zweite Drehachse (O₁Y₁, O₂Y₂, O₃Y₃) in einer Ebene (X₁O₁Y₁, X₂O₂Y₂, X₃O₃Y₃) angeordnet ist, die senkrecht zur ersten Drehachse (OZ) ausgerichtet ist.

2. Drehflügelflugzeug nach Anspruch 1, **dadurch gekennzeichnet, dass** die mindestens eine bewegliche Klappe (V1, V2, V3) eine erste bewegliche Klappe (V1) und eine zweite bewegliche Klappe (V2) umfasst, wobei die erste und die zweite bewegliche Klappe (V1, V2) frei sind, sich in Bezug auf die zweiten Drehachsen (O₁Y₁, O₂Y₂, O₃Y₃) individuell in mindestens zwei voneinander verschiedenen Winkelausrichtungen auszurichten.

3. Drehflügelflugzeug nach Anspruch 1, **dadurch gekennzeichnet, dass** die mindestens eine bewegliche Klappe (V1', V2', V3') eine erste bewegliche Klappe (V1') und eine zweite bewegliche Klappe (V2') umfasst, wobei die erste und die zweite bewegliche Klappe (V1', V2') in Bezug auf die zweiten Drehachsen (O₁Y₁, O₂Y₂, O₃Y₃) gemeinsam in einer jeweils gleichen Winkelausrichtung schwenken.

4. Drehflügelflugzeug nach einem der Ansprüche 1 bis 3, **dadurch gekennzeichnet, dass** die mindestens eine bewegliche Klappe (V1, V2, V3) sich in Längsrichtung zwischen zwei gegenüberliegenden Flächen (7 und 8) erstreckt, die den Lufteinlass (5) begrenzen, dass ein erstes Ende (10) der mindestens einen beweglichen Klappe (V1, V2, V3) mit einem ersten Lager (11) zusammenwirkt, das in einer ersten Fläche (7) angeordnet ist, und ein zweites Ende (12) der mindestens einen beweglichen Klappe (V1, V2, V3) mit einem zweiten Lager (13) zusammenwirkt, das in einer zweiten Fläche (8) angeordnet ist, und dass das erste und das zweite Lager (11 und 13) koaxial auf der zweiten Drehachse (O₁Y₁, O₂Y₂, O₃Y₃) angeordnet sind.

5. Drehflügelflugzeug nach einem der Ansprüche 1 bis 3, **dadurch gekennzeichnet, dass** die mindestens eine bewegliche Klappe V2', V3') sich in Längsrichtung zwischen zwei gegenüberliegenden Flächen (17 und 18) erstreckt, die den Lufteinlass (25) begrenzen, dass ein erstes Ende (20) der mindestens einen beweglichen Klappe (V1', V2', V3') mit einem ersten Lager (21) zusammenwirkt, das auf einer festen Achse (24) angeordnet ist, die durch die mindestens eine bewegliche Klappe V2', V3') verläuft, und ein zweites Ende (22) der mindestens einen beweglichen Klappe V2', V3') mit einem zweiten Lager (23) zusammenwirkt, das auf der festen Achse (24) angeordnet ist, und dass das erste und das zweite Lager (21 und 23) koaxial auf der zweiten Drehachse (O₁Y₁, O₂Y₂, O₃Y₃) angeordnet sind.

6. Drehflügelflugzeug nach einem der Ansprüche 1 bis 5, **dadurch gekennzeichnet, dass** die mindestens eine bewegliche Klappe (V1, V2, V3, V1', V2', V3') eine erste Klappe (V1, V1'), die in Bezug auf eine zweite Drehachse (O₁Y₁) drehbar ist, und eine zweite Klappe (V2, V2') umfasst, die in Bezug auf eine andere zweite Drehachse (O₂Y₂) drehbar ist, und dass die zweiten Drehachsen (O₁Y₁ und O₂Y₂) parallel zueinander angeordnet sind.

7. Drehflügelflugzeug nach einem der Ansprüche 1 bis 6, **dadurch gekennzeichnet, dass** die mindestens eine bewegliche Klappe (V1, V2, V3, V1', V2', V3') eine erste Klappe (V1, V1'), die in Bezug auf eine zweite Drehachse (O₁Y₁) drehbar ist, eine zweite Klappe (V2, V2'), die in Bezug auf eine andere zweite Drehachse (O₂Y₂) drehbar ist, und eine dritte Klappe (V3, V3'), die in Bezug auf eine andere zweite Drehachse (O₃Y₃) drehbar ist, umfasst, und dass die zweiten Drehachsen (O₁Y₁, O₂Y₂, O₃Y₃) der ersten, zweiten und dritten beweglichen Klappen (V1, V2, V3, V1', V2', V3') koplanar angeordnet sind.

8. Drehflügelflugzeug nach einem der Ansprüche 1 bis 7, **dadurch gekennzeichnet, dass** die mindestens eine bewegliche Klappe (V1, V2, V3) eine Mehrzahl von Querschnitten senkrecht zu der zweiten Drehachse (O₁Y₁, O₂Y₂, O₃Y₃) aufweist, und die Mehrzahl von Querschnitten ein gleiches aerodynamisches Profil (P1) aufweist.

9. Drehflügelflugzeug nach einem der Ansprüche 1 bis 7, **dadurch gekennzeichnet, dass** die mindestens eine bewegliche Klappe V2', V3') eine Mehrzahl von Querschnitten senkrecht zu der zweiten Drehachse (O₁Y₁, O₂Y₂, O₃Y₃) aufweist, wobei die Mehrzahl von Querschnitten mindestens zwei voneinander verschiedene Profile (P1', P2') aufweist.

10. Drehflügelflugzeug nach einem der Ansprüche 1 bis 9, **dadurch gekennzeichnet, dass** die mindestens eine bewegliche Klappe (V1, V2, V3) eine erste bewegliche Klappe (V1) und eine zweite bewegliche Klappe (V2) umfasst, wobei die erste und die zweite bewegliche Klappe (V1 und V2) zueinander identisch sind.

11. Drehflügelflugzeug nach einem der Ansprüche 1 bis 9, **dadurch gekennzeichnet, dass** die mindestens eine bewegliche Klappe V2', V3') eine erste bewegliche Klappe (V1') und eine zweite bewegliche Klappe (V2') umfasst, wobei die erste und die zweite bewegliche Klappe V2') voneinander verschieden sind.

12. Drehflügelflugzeug nach einem der Ansprüche 1 bis 11, **dadurch gekennzeichnet, dass** die mindestens eine bewegliche Klappe (V1, V2, V3) vom Profiltyp ist, dass die mindestens eine bewegliche Klappe (V1, V2, V3) einerseits eine obere Fläche (30) und eine untere Fläche (31) und andererseits eine die obere Fläche (30) und die untere Fläche (31) verbindende Vorderkante (32) und eine die obere Fläche (30) und die untere Fläche (31) verbindende Hinterkante (33) aufweist, und dass die Vorderkante (32) und die Hinterkante (33) sich im Wesentlichen in Längsrichtung entlang der zweiten Drehachse (O₁Y₁, O₂Y₂, O₃Y₃) erstrecken.

13. Drehflügelflugzeug nach einem der Ansprüche 1 bis 11, **dadurch gekennzeichnet, dass** die mindestens eine bewegliche Klappe V2', V3') eine ebene Form aufweist, die sich im Wesentlichen in Längsrichtung entlang der zweiten Drehachse (O₁Y₁, O₂Y₂, O₃Y₃) erstreckt.

14. Drehflügelflugzeug nach einem der Ansprüche 1 bis 13, **dadurch gekennzeichnet, dass** die aerodynamische Vorrichtung (2) für jede der mindestens einen beweglichen Klappe (V1, V2, V3, V1', V2', V3') mindestens ein Anschlagelement (40) umfasst, das in der Lage ist, den mindestens einen Freiheitsgrad der Drehung in Bezug auf die Verkleidung (4) winkelmäßig zu begrenzen.

15. Drehflügelflugzeug nach einem der Ansprüche 1 bis 14, **dadurch gekennzeichnet, dass** die mindestens eine bewegliche Klappe (V1, V2, V3, V1', V2', V3') einen Schwerpunkt (G) aufweist, wobei der Schwerpunkt (G) in Bezug auf die zweite Drehachse (O₁Y₁, O₂Y₂, O₃Y₃) radial versetzt angeordnet ist, um die mindestens eine bewegliche Klappe (V1, V2, V3, V1', V2', V3') in eine vorgegebene Winkelausrichtung rückzustellen, wenn der Frischluftstrom Null ist, wobei die vorgegebene Winkelausrichtung es der mindestens einen beweglichen Klappe (V1, V2, V3, V1', V2', V3') ermöglicht, eine Abdichtung der Öffnung (6, 26) des Lufteinlasses (5, 25) zu maximieren.

16. Drehflügelflugzeug nach einem der Ansprüche 1 bis 15, **dadurch gekennzeichnet, dass** die aerodynamische Vorrichtung (2) für jede der mindestens einen beweglichen Klappe (V1, V2, V3, V1', V2', V3') mindestens ein elastisches Rückstellmittel (41) umfasst, das geeignet ist, die mindestens eine bewegliche Klappe (V1, V2, V3, V1', V2', V3') in eine vorgegebene Winkelausrichtung rückzustellen, wenn der Frischluftstrom Null ist, wobei die vorgegebene Winkelausrichtung es der mindestens einen beweglichen Klappe (V1, V2, V3, V1', V2', V3') ermöglicht, eine Abdichtung der Öffnung (6, 26) des Lufteinlasses (5, 25) zu maximieren.

## Claims

1. Rotorcraft (1) comprising an aerodynamic device (2) arranged below a rotor (3) which contributes at least to the lift of said rotorcraft (1) in the air, said rotor (3) rotating about a first axis of rotation (OZ), said aerodynamic device (2) comprising a fairing (4) having at least one air inlet (5, 25) to allow a flow of fresh air to flow from a zone located outside said rotorcraft (1) to another zone located inside said rotorcraft (1), wherein, at least at a mouth (6, 26) of said at least one air inlet (5, 25) of said fairing (4), said aerodynamic device (2) comprises at least one flap (V1, V2, V3, V1', V2', V3'), **characterised in that** said at least one flap can move in rotation, said at least one movable flap (V1, V2, V3, V1', V2', V3') having at least one degree of rotational freedom about a second axis of rotation (O₁Y₁, O₂Y₂, O₃Y₃) relative to said fairing (4), said at least one movable flap (V1, V2, V3, V1', V2', V3') orienting itself automatically and passively according to a current orientation of said flow of fresh air at said mouth (6, 26) of said air inlet (5, 25), said second axis of rotation (O₁Y₁, O₂Y₂, O₃Y₃) being arranged in a plane (X₁O₁Y₁, X₂O₂Y₂, X₃O₃Y₃) oriented perpendicularly relative to said first axis of rotation (OZ).

2. Rotorcraft according to claim 1, **characterised in that** said at least one movable flap (V1, V2, V3) comprises a first movable flap (V1) and a second movable flap (V2), said first and second movable flaps (V1, V2) being free to orient themselves individually in at least two angular orientations that are different from one another, respectively, relative to said second axes of rotation (O₁Y₁, O₂Y₂, O₃Y₃).

3. Rotorcraft according to claim 1, **characterised in that** said at least one movable flap (V1', V2', V3') comprises a first movable flap (V1') and a second movable flap (V2'), said first and second movable flaps (V1', V2') pivoting jointly in the same angular orientation, respectively, relative to said second axes of rotation (O₁Y₁, O₂Y₂, O₃Y₃).

4. Rotorcraft according to any of claims 1 to 3, **characterised in that** said at least one movable flap (V1, V2, V3) extends longitudinally between two opposing faces (7 and 8) which delimit said air inlet (5), a first end (10) of said at least one movable flap (V1, V2, V3) cooperating with a first bearing (11) arranged in a first face (7) and a second end (12) of said at least one movable flap (V1, V2, V3) cooperating with a second bearing (13) arranged in a second face (8), said first and second bearings (11 and 13) being arranged coaxially on said second axis of rotation (O₁Y₁, O₂Y₂, O₃Y₃).

5. Rotorcraft according to any of claims 1 to 3, **characterised in that** said at least one movable flap (V1', V2', V3') extends longitudinally between two opposing faces (17 and 18) which delimit said air inlet (25), a first end (20) of said at least one movable flap (V1', V2', V3') cooperating with a first bearing (21) arranged on a fixed shaft (24) that passes through said at least one movable flap (V1', V2', V3') and a second end (22) of said at least one movable flap (V1', V2', V3') cooperating with a second bearing (23) arranged on said fixed shaft (24), said first and second bearings (21 and 23) being arranged coaxially on said second axis of rotation (O₁Y₁, O₂Y₂, O₃Y₃).

6. Rotorcraft according to any of claims 1 to 5, **characterised in that** said at least one movable flap (V1, V2, V3, V1', V2', V3') comprises a first flap (V1, V1') which can move in rotation relative to a second axis of rotation (O₁Y₁ and a second flap (V2, V2') which can move in rotation relative to another second axis of rotation (O₂Y₂), said second axes of rotation (O₁Y₁ and O₂Y₂) being arranged in parallel with one another.

7. Rotorcraft according to any of claims 1 to 6, **characterised in that** said at least one movable flap (V1, V2, V3, V1', V2', V3') comprises a first flap (V1, V1') which can move in rotation relative to a second axis of rotation (O₁Y₁), a second flap (V2, V2') which can move in rotation relative to another second axis of rotation (O₂Y₂) and a third flap (V3, V3') which can move in rotation relative to another second axis of rotation (O₃Y₃), said second axes of rotation (O₁Y₁, O₂Y₂, O₃Y₃) of said first, second and third movable flaps (V1, V2, V3, V1', V2', V3') being arranged in a coplanar manner.

8. Rotorcraft according to any of claims 1 to 7, **characterised in that** said at least one movable flap (V1, V2, V3) has a plurality of cross sections perpendicular to said second axis of rotation (O₁Y₁, O₂Y₂, O₃Y₃), said plurality of cross sections having the same aerodynamic profile (P1).

9. Rotorcraft according to any of claims 1 to 7, **characterised in that** said at least one movable flap (V1', V2', V3') has a plurality of cross sections perpendicular to said second axis of rotation (O₁Y₁, O₂Y₂, O₃Y₃), said plurality of cross sections having at least two profiles (P1', P2') which are different from one another.

10. Rotorcraft according to any of claims 1 to 9, **characterised in that** said at least one movable flap (V1, V2, V3) comprises a first movable flap (V1) and a second movable flap (V2), said first and second movable flaps (V1 and V2) being identical to one another.

11. Rotorcraft according to any of claims 1 to 9, **characterised in that** said at least one movable flap (V1', V2', V3') comprises a first movable flap (V1') and a second movable flap (V2'), said first and second movable flaps (V1', V2') being different from one another.

12. Rotorcraft according to any of claims 1 to 11, **characterised in that** said at least one movable flap (V1, V2, V3) is profiled, said at least one movable flap (V1, V2, V3) having an upper surface (30) and a lower surface (31), a leading edge (32) connecting the upper surface (30) and the lower surface (31), and a trailing edge (33) connecting the upper surface (30) and the lower surface (31), said leading edge (32) and said trailing edge (33) extending substantially longitudinally along said second axis of rotation (O₁Y₁, O₂Y₂, O₃Y₃).

13. Rotorcraft according to any of claims 1 to 11, **characterised in that** said at least one movable flap (V1', V2', V3') has a planar shape extending substantially longitudinally along said second axis of rotation (O₁Y₁, O₂Y₂, O₃Y₃).

14. Rotorcraft according to any of claims 1 to 13, **characterised in that** said aerodynamic device (2) comprises, for each of said at least one movable flap (V1, V2, V3, V1', V2', V3'), at least one stop member (40) which is capable of angularly limiting said at least one degree of rotational freedom relative to said fairing (4).

15. Rotorcraft according to any of claims 1 to 14, **characterised in that** said at least one movable flap (V1, V2, V3, V1', V2', V3') has a centre of gravity (G), said centre of gravity (G) being radially offset relative to said second axis of rotation (O₁Y₁, O₂Y₂, O₃Y₃) in order to automatically return said at least one movable flap (V1, V2, V3, V1', V2', V3') into a predetermined angular orientation when said flow of fresh air is zero, said predetermined angular orientation allowing said at least one movable flap (V1, V2, V3, V1', V2', V3') to maximize closing said mouth (6, 26) of said air inlet (5, 25).

16. Rotorcraft according to any of claims 1 to 15, **characterised in that** said aerodynamic device (2) comprises, for each of said at least one movable flap (V1, V2, V3, V1', V2', V3'), at least one resilient return means (41) which is capable of returning said at least one movable flap (V1, V2, V3, V1', V2', V3') into a predetermined angular orientation when said flow of fresh air is zero, said predetermined angular orientation allowing said at least one movable flap (V1, V2, V3, V1', V2', V3') to maximize closing said mouth (6, 26) of said air inlet (5, 25).
